# EUROPEAN PATENT SPECIFICATION

(11) **EP 0 384 495 B1**
(45) Date of publication and mention of the grant of the patent: **12.01.1994**
(21) Application number: 90107304.9
(22) Date of filing: 20.02.1987
(51) Int. Cl.: H02K 5/22, H02K 29/10, H02K 41/035

(54) **Rotary drive device**
Drehantriebsvorrichtung
Dispositif d'entraînement rotatif

(30) Priority: 20.02.1986 JP 33753/86; 20.02.1986 JP 33749/86; 20.02.1986 JP 22048/86; 18.07.1986 JP 109460/86
(43) Date of publication of application: 29.08.1990
(62) Divisional of application: 87301475.7
(73) Proprietor: FUJITSU LIMITED, Kawasaki-shi, Kanagawa 211 (JP)
(72) Inventor: Mihara, Takahisa, Kanagawa 228 (JP); Sanma, Shoji, Nakahara-ku, Kawasaki-shi, Kanagawa 211 (JP)
(74) Representative: Fane, Christopher Robin King

(56) References cited:
- EP-A- 0 031 876
- CH-A- 599 706
- GB-A- 2 087 662
- US-A- 3 453 466
- US-A- 4 327 347
- US-A- 4 476 404
- JOURNAL OF ELECTRONIC ENGINEERING vol. 23, no. 230, February 1986, TOKYO pages 36 - 39; H. HORIKAWA: 'Development of a miniature HDD head actuator indispensable for powerful storage devices'

## Description

The present invention relates to a rotary drive device, and particularly to a drive device which may be used, for example, for speed control (coarse control) and position control (fine control) in accordance with position signals transmitted from an encoder incorporated with a head positioning actuator of a magnetic disk drive. Such a drive device, including both an encoder and a motor, is known as an "encoder motor".

Several attempts have been made to use an encoder motor as, for example, an actuator in a magnetic head positioning system (an actuator positioning system) included in a compact magnetic disk drive. Such an encoder motor must be very compact, be capable of a quick acceleration (high-speed access), and have a high rigidity.

A paper entitled "Development of a miniature HDD head actuator indispensable for powerful storage devices "by H. Horikawa (Journal of Electronic Engineering, vol. 23, no. 230, January 1986, pages 36 to 39, Tokyo) discloses a rotary drive device of the kind comprising: a magnetic stator; a rotor structure attached to a drive shaft of the device and including at least one electrical drive coil winding; positional detection means, including an encoded member movable rotatably with the said drive shaft, for providing monitoring signals dependent upon the rotational position of the drive shaft with respect to the said stator when rotation of that shaft is brought about by energization of the said drive coil winding(s); and control means operable in dependence upon the said monitoring signals to control rotation of the said drive shaft within a preset restricted angular range.

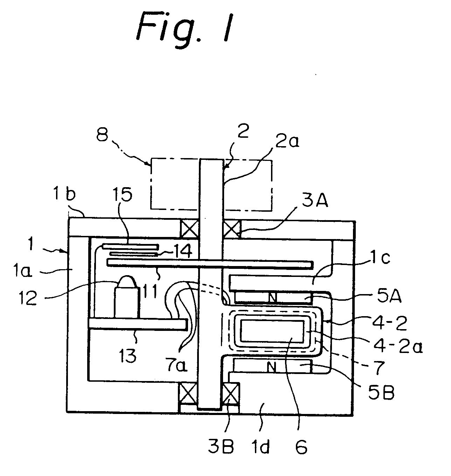

A previously-considered moving coil encoder motor of the above kind is shown in Fig. 1 of the accompanying drawings, and is formed as an oscillating motor, the angle of rotation of the motor being limited to a range of, for example, about 100°.

A motor case 1 of this motor comprises a case body 1a having a cylindrical shape with a base, and a cover 1b fitted over an upper opening of the case body 1a.

A shaft (rotary shaft) 2 has an end portion 2a projecting outward from the cover 1b and is supported at the center of the motor case 1 by means of bearings 3A and 3B in such a manner that the shaft 2 is rotatable freely in opposite directions.

Fixed to the shaft 2 inside the case 1 is a cantilever-like bobbin 4-2 which extends radially outwards from the shaft 2 and has a central hollow portion 4-2a.

On the periphery of the bobbin 4-2, there is arranged a coil 7 indicated by a dotted line in the figure. The coil 7 is electrically connected to a printed circuit board 13 via coil lead wires 7a.

A semi-annular core 6 of square cross-section is arranged in the hollow portion 4-2a of the bobbin 4-2 and fixed to the case body 1a in such a manner that the core 6 passes through the hollow portion 4-2a of the bobbin 4-2 without touching the wall of the hollow portion 4-2a.

Mutually-opposing magnets (permanent magnets) 5A and 5B are arranged so that they face respective opposite adjacent surfaces of the bobbin 4-2 which extend perpendicularly to the axis of the shaft 2. The magnets 5A and 5B are fixed respectively to a supporting plate 1c and a base plate 1d, which plates are formed integrally with the case body 1a.

A capstan 8 is engaged around and fixed to the projecting end portion 2a of the shaft 2.

The shaft 2 of the motor portion of the encoder motor with the above arrangement is rotated in opposite directions within a predetermined range of angles of rotation of, for example, about 100° when drive currents of the appropriate direction are applied to the coil 7.

A code wheel 11 is disposed, inside the case 1, in a gap between the supporting plate 1c and the cover 1b. The code wheel 11 is inserted and fixed to the shaft 2. Facing one side of the code wheel 11 and in the vicinity of the peripheral portion (a portion in which slits are formed) thereof, a light source 12, such as an LED, is disposed. The light source 12 is mounted on a printed circuit board 13 which includes an encoder demodulating portion. The printed circuit board 13 is fixed to the case body 1a. A phase plate 14 is provided facing the other side of the code wheel 11 in the vicinity of the peripheral portion thereof, that is exposed to radiation from the light source 12. Above the phase plate 14, a photosensor portion (a photodiode matrix) 15 is arranged. The phase plate 14 and the photosensor portion 15 are fixed to the cover 1b of the case 1. The photosensor portion 15 is electrically connected to the printed circuit board 13.

The moving coil type oscillating motor described with reference to Fig. 1 suffers from a disadvantage in that, although the lead wires 7a supplying current to the coil 7 are of sufficient length to enable rotational movement within the required angular limits, the lead wires 7a are directly subjected to repeated stress due to the swing movement of the coil 7 (bobbin 4-2). Accordingly, in prolonged use a problem can occur in that the lead wires 7a become prone to fatigue-related failure. For example, the lead wires 7a might become unreliable after being subjected to between 100 million and 1 billion swing motions, whereas a magnetic disk unit might typically be required to operate satisfactorily beyond that number of swing motions. Furthermore, the lead wires 7a can occupy an undesirably large space. Since the lead wires 7a are deformed by the rotational operation of the rotary shaft 2, the offset force caused by the lead wire 7a around the rotary shaft 2 is unstable, causing a problem in control operations.

GB-A-2 087 662 discloses a positioning motor having a restricted range of angular movement, in which current is fed to coils carried on the rotor by stranded wires that are led through a hollow shaft, which extends coaxially through the rotor and rotates therewith, from stationary input connections at one axial end of the motor to soldering tags supported by the rotor near the opposite axial end of the motor, which tags serve to connect the wires to the rotor windings. In such an arrangement, the length of the hollow shaft is available for absorbing torsion developed in the wires during rotation of the motor, but this may be insufficient to avoid undesirable mechanical stressing of the wires in smaller motors, and/or where the wires are passed down only a part of such a shaft.

It is desirable to provide an encoder motor which can be made very compact whilst retaining a desirably long operating lifetime.

According to the present invention there is provided a rotary drive device comprising: a magnetic stator; a rotor structure attached to a drive shaft of the device and including at least one electrical drive coil winding; positional detection means, including an encoded member movable rotatably with the said drive shaft, for providing monitoring signals dependent upon the rotational position of the drive shaft with respect to the said stator when rotation of that shaft is brought about by energization of the said drive coil winding(s); control means operable in dependence upon the said monitoring signals to control rotation of the said drive shaft within a preset restricted angular range; characterised in that coil lead wires, for supplying electrical current to the said drive coil winding(s), extend from the drive coil winding(s) through a substantially radial passageway in the said drive shaft, at a location substantially mid-way therealong, to an axial passageway therein and continue along that axial passageway to emerge from one end of the drive shaft; and in that respective ends of the drive coil lead wires that protrude from the said one end of the drive shaft are connected to respective terminals provided on a terminal fixing unit mounted on the said drive shaft at the said one end so as to rotate therewith.

In a preferred embodiment of the invention the device further comprises ribbon-like resilient electrically-conductive intermediate lead means extending in a spiral about a part of the said terminal fixing unit and providing connections between the said terminals and respective external power supply terminals of the device.

In a moving coil type swing motor embodying the invention and including an improved coil lead wire arrangement, the main coil lead wires are not directly subjected to repeated stress, so that these lead wires are significantly less prone to fatigue-related failure, thereby improving reliability.

Further reference will now be made, by way of example, to the accompanying drawings, in which:
Fig. 1, referred to hereinbefore, shows a side view of a previously-considered encoder motor, not embodying the present invention;
Figs. 2(A) and 2(B) show respectively a partly cut-away plan view and a sectional side view of an encoder motor embodying the present invention, in which two planes corresponding to respective parts of Fig. 2(B) are represented by respective straight-line parts of a line A₁-A₂ in Fig. 2(A);
Fig. 3 shows a perspective view of a bobbin of the encoder motor shown in Fig. 2;
Fig. 4 shows a perspective view of coils of the bobbin shown in Fig. 3;
Fig. 5 shows an underneath plan view of the encoder motor of Fig. 2, in the direction of an arrow "B" shown in Fig. 2(B);
Figs. 6(A), 6(B), and 6(C) show respective plan, side and underneath plan views of a terminal fixing unit of the encoder motor of Fig. 2, in which Fig. 6(B) shows a view in the direction of an arrow "C" shown in Fig. 6(A), and Fig. 6(C) shows a view in the direction of an arrow "D" shown in Fig. 6(B);
Figs. 7(A) and 7(B) show respective side and plan views of a connecting lead component of the encoder motor of Fig. 2, in which Fig. 7(B) shows a view in the direction of an arrow "E" shown in Fig. 7(A);
Figs. 8(A), 8(B), and 8(C) show a plan view, a cross-sectional side view taken along a line F₁-F₂ shown in Fig. 8(A), and a side view respectively of a lead wire fixing case of the encoder motor of Fig. 2;
Figs. 9(A) and 9(B) show respective plan and side views of a collar of the encoder motor in Fig. 2, in which Fig. 9(B) shows a view in the direction of an arrow "G" shown in Fig. 9(A);
Figs. 10(A) and 10(B) show respective plan and cross-sectional side views of a magnetic disk unit including an encoder motor embodying the present invention; and
Fig. 11 shows an exploded perspective view of another magnetic disk unit including an encoder motor embodying the present invention.

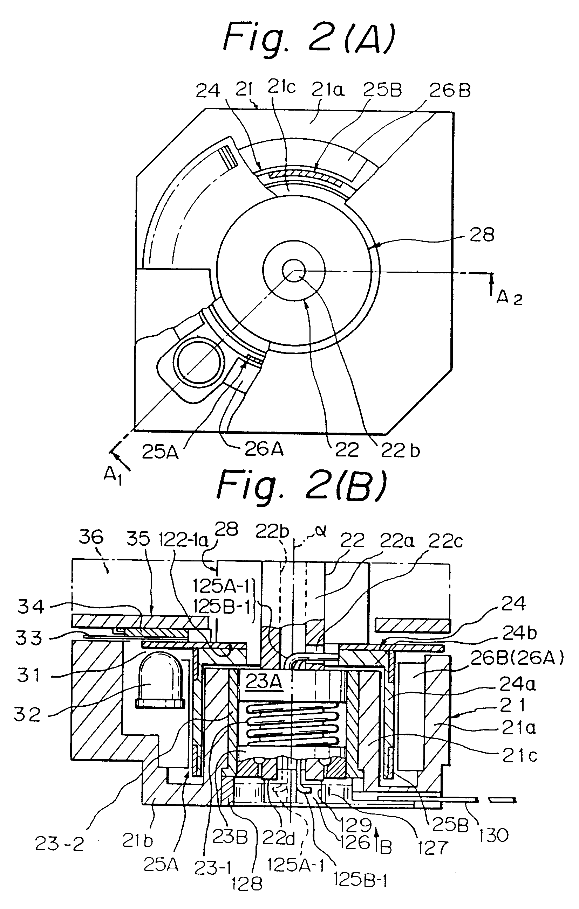

An encoder motor embodying the present invention is shown in Fig. 2 and is formed as a swing motor having a restricted range of rotation angle of about 100°.

As shown in Fig. 2, a motor case 21 comprises an outer casing wall portion 21a, a base wall portion 21b, and a cylindrical inner bearing-holding wall 21c for holding bearings. The motor case 21 is integrally formed and acts also as a magnetic circuit yoke.

A shaft (rotary drive shaft) 22 has an end portion 22a projecting from the top of the motor case 21 and is supported in a central region of the motor case 21 by means of rolling bearings 23A and 23B in such a manner that the shaft 22 is rotatable freely in opposing (forward and reverse) directions. The shaft 22 is hollow with an axial passageway 22b formed therein along its axis of rotation. The shaft 22 is provided also with a substantially radial passageway 22c formed therein at a location substantially mid-way therealong. The axial passageway need not extend into the end portion 22a of the shaft 22.

The rolling bearings 23A and 23B have inner rings provided around the periphery of the shaft 22 and formed integrally therewith. The rolling bearings 23A and 23B may together be referred to as a "shaft bearing". The shaft bearing is provided with a compression spring 23-1 disposed between the bearings 23A and 23B, to apply pre-loads in opposite axial directions to the respective outer rings of the bearings 23A and 23B, and also includes a sleeve 23-2 for holding the outer rings of the roller bearings 23A and 23B. The sleeve 23-2 has a cylindrical shape and engages with the outer rings of the bearings 23A and 23B to fix them. The compression spring 23-1, the sleeve 23-2 for holding the outer rings, and the shaft bearing are assembled as a single sub-unit.

Therefore, as shown in Fig. 2(B), the shaft 22 and the bearings 23A and 23B can be fitted into the motor case 21 by inserting the sub-unit including the sleeve 23-2 into the bearing-holding wall 21c of the motor case 21, and by fixing the sleeve 23-2 to that wall 21c. In this way, by providing the holding wall 21c surrounding the bearings 23A and 23B, the fitting accuracy of the bearings can be improved, enabling the rotational accuracy of the shaft 22 to be improved. Although the sleeve 23-2 is not necessarily required, it should preferably be included.

A capstan 28 is fitted over and fixed to the projecting end portion 22a of the shaft 22. A code wheel 31 (encoded member) is arranged coaxially with respect to the shaft 22 and fixed to an inner end face of the capstan 28. A substantially cylindrical bobbin 24 (rotor body) is arranged coaxially with respect to the shaft 22 and fixed to a lower main face portion of the code wheel 31.

The bobbin 24 is integrally formed, for example by moulding, and comprises a cylindrical wall 24a and an upper end wall 24b providing an upper end-face that extends substantially perpendicularly to the axis of rotation. The inner surface of the cylindrical wall 24a is spaced apart by a small distance from the outer surface of the bearing holding wall 21c of the motor case 21. The upper end wall 24b is fixed to the code wheel 31 by adhesive or screws. Moving coils 25A and 25B are provided on the periphery of the cylindrical wall 24a so as to form therewith a thin-walled hollow cylindrical rotor structure.

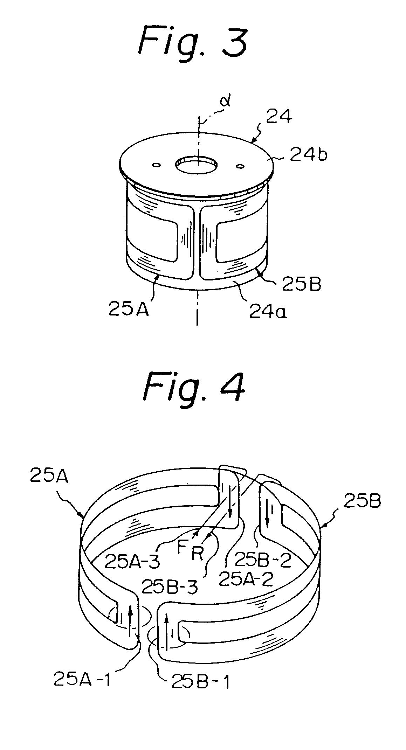

Figure 3 is a view showing the bobbin 24 with the coils 25A and 25B disposed thereon, and Fig. 4 is a view showing the coils 25A and 25B. As shown in Fig. 4, each of the coils 25A and 25B has the form of a substantially rectangular (or square) flat coil the main plane of which has been wrapped substantially half-way around the cylindrical outer surface of the bobbin 24. Diametrically opposed coil portions 25A-1 and 25B-1, and 25A-2 and 25B-2, extend parallel to the axis of rotation and serve to generate torque to bring about rotation of the drive shaft. As shown in Fig. 3, the coils 25A and 25B are fixed on the periphery of the bobbin 24 (on the cylindrical wall 24a) so as to be diametrically opposed to one another. The coils 25A and 25B are electrically connected together. It is possible to provide just one, instead of two, of the coils 25A and 25B.

The bobbin 24 is formed of a material having a coefficient of thermal expansion substantially equal to that of the code wheel 31, which is made of glass in this embodiment. As a result, distortion due to differing respective thermal expansions of the bobbin 24 and the code wheel 31 can be substantially prevented.

A pair of magnets (permanent magnets) 26A and 26B are radially spaced apart by a small distance from the periphery of the bobbin 24 and are diametrically opposed to one another. The magnets 26A and 26B, constituting a magnetic stator, are fixed on the inner surface of the outer wall portion 21a of the motor case 21. One of the magnets 26A and 26B has an N-pole and the other an S-pole.

In this embodiment, the glass code wheel 31 is a transparent disk. In a peripheral region of a main face of the code wheel 31, there is provided, e.g. by a vapor deposition method, a pattern of radial slits 31a arranged at predetermined intervals in the circumferential direction to form a dark and light slit pattern. A light source 32 such as a light emitting diode (LED) is located so as to face the lower side of the code wheel 31 in the vicinity of the said peripheral region and is mounted on the motor case 21. A phase plate 33, located to the upper side of the code wheel 31, adjacent to the said peripheral region thereof, faces the light source 32. The phase plate 33 is also provided with a slit pattern (not shown) in an area thereof adjacent to the slit pattern 31a of the code wheel 31. Above the phase plate 33, a photosensor portion (a photodiode matrix) 34 is arranged. The phase plate 33 and the photosensor portion 34 are mounted on a printed circuit board 35 which includes an encoder demodulating portion. The photosensor portion 34 is electrically connected to the printed circuit board 35, and the printed circuit board 35 is fixed to the motor case 21.

The printed circuit board 35 is preferably provided with an iron core, and may be formed by coating insulating films on both sides of an iron plate and by forming circuit patterns on the films. By virtue of this configuration, the thermal expansion coefficient of the printed circuit board 35 will be substantially equal to that of the yoke (the motor case 21) so that displacement of the phase plate 33 on the printed circuit board 35 can be eliminated to realize more precise control.

Circuitry making up the encoder demodulating portion may be provided in a space 36.

The encoder portion (positional detection means) of the encoder motor mainly comprises the code wheel 31, the light source 32, the phase plate 33, the photosensor portion 34, and the printed circuit board 35 which includes the encoder demodulating portion. In the encoder portion, as the code wheel 31 rotates, the slit pattern of the code wheel 31 and the phase plate 33 cooperate, or interfere with each other, to change the intensity of light reaching the photosensor portion 34. The intensity of this light is sensed by the photosensor portion 34 which performs a photoelectric conversion on the sensed light to provide an output signal in the form of a two-phase sine wave with a phase difference of 90° (phase difference of 1/4 of the pitch of the slits), which signal is demodulated and output from the motor to provide monitoring signals dependent upon the rotational position of the drive shaft with respect to the stator. The output signal provided by the two-phase sine wave is supplied to a control portion (not shown) which controls the energisation of the coils 25A and 25B, and may be used, in the case of a magnetic disk drive, for example, to enable a magnetic head to be moved to a selected track on a disk during an access operation.

In the rotary drive device of Figure 2, the cylindrical bobbin 24 provided with the coils 25A and 25B is secured at an end-face thereof directly to the code wheel 31 to form a compact integral unit. As a result, the total inertia of the rotating parts of the unit is kept desirably low so that rapid acceleration of the drive shaft is possible, this form of construction also providing high rigidity (high resonant frequency) and good rotational balance. Since the bearings 23A, 23B for supporting the rotary shaft 22 are held by a cylindrical inner surface of the bearing-holding wall 21c formed integrally with the motor case 21, the mechanical accuracy of the bearings can be improved to improve the rotational accuracy of the shaft 22. As a result, a moving coil type encoder motor of more compact size having a higher efficiency can be realized, as compared with prior encoder motors.

In addition, since a part of the code wheel is firmly sandwiched between respective opposing end-faces of the capstan and the bobbin and fixed to the shaft, the torque generating portion (the bobbin), torque transmitting portion (the capstan), and position detection portion (the code wheel) of the device are close to one another, thereby improving the rigidity to enable high precision driving control.

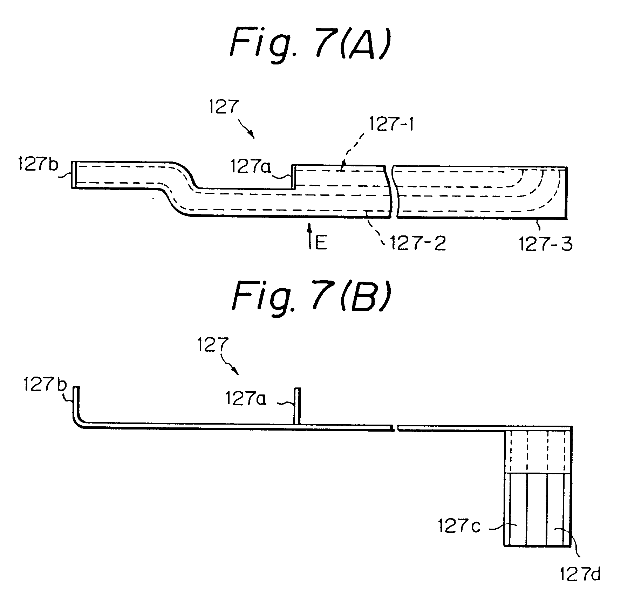

In the encoder motor shown in Fig. 2, the rotary shaft 22 is provided with an axial passageway 22b, formed along the axis of rotation thereof, and a radial passageway 22c formed therein at a location substantially mid-way therealong, to communicate with the axial passageway 22b. The motor also comprises coil lead wires 125A-1 and 125B-1 connected to the moving coils 25A and 25B. The coil lead wires 125A-1 and 125B-1 are passed through the radial passageway 22c and the axial passageway 22b, and emerge from one end 22d of the rotary shaft 22, where they are connected to a terminal fixing unit 126 fixed to the end surface 22d of the shaft. The motor further comprises a band-form resilient connecting lead component 127, wound in a spiral around a part of the terminal fixing unit 126. Inner terminals (Fig. 7(B)) 127a and 127b of the lead component 127 are connected and fixed to the lead wires 125A-1 and 125B-1 respectively, and outer terminals (Fig. 7(B)) 127c and 127d thereof are fixed to a portion of the motor case 21 and are for connection respectively to external power supply leads 130.

The coil lead wires (125A-1, 125B-1) are passed along the inside of the rotary shaft (22), taken out of the end (22d), passed through the terminal fixing unit (126) fixed to the end 22d, and fixed to the fixing unit (126) so that in operation of the motor the coil lead wires (125A-1, 125B-1) rotate together with the moving coils (25A, 25B) and the rotary shaft (22) to substantially eliminate the imposition of repeated stress on the coil lead wires during swing motion. Although such repeated stress due to the swing motion affects the spirally-formed lead component (127), in this case the repeated stress is distributed throughout the length thereof and absorbed within the elastic limit of the lead component (127). Accordingly, the fatigue resistance to repeated stress of the lead component (127) is such that an operating life-time (durability) of, for example, one billion swing motions is possible. Further, by passing the coil lead wires (125A-1, 125B-1) through a hollow portion of the rotary shaft 22, the motor can be made desirably small, and by rotating the coil lead wires together with the rotary shaft (22) offset force due to the influence of the coil lead wires on the rotating operation of the rotary shaft (22) can be entirely eliminated.

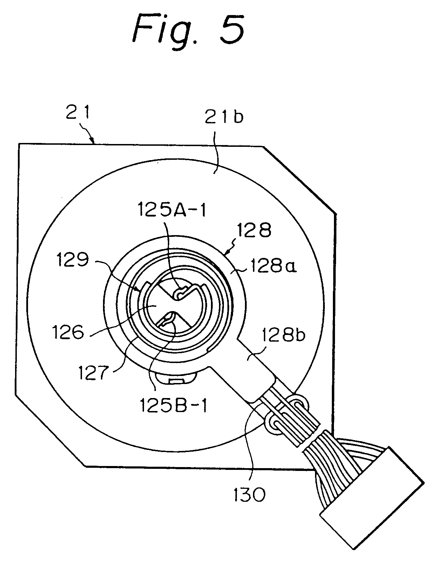

The coil lead wire arrangment of Fig. 2 will be discussed in more detail below with reference to Figs. 5 to 9.

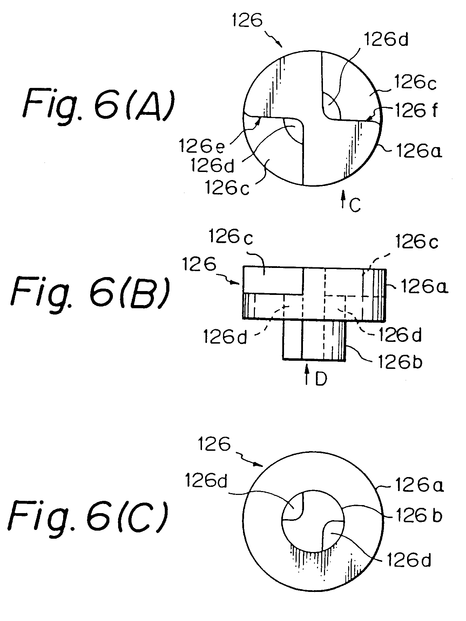

Fixed coaxially to the lower end 22d of the rotary shaft 22 is the terminal fixing unit 126. The terminal fixing unit 126 is molded from an insulating material such as resin, and as shown in Fig. 6 comprises a body portion (126a), an insertion portion (126b), terminal fixing recesses (126c) formed in the body portion 126a, a pair of axial passageways (126d), formed by cutting away diametrical-opposite peripheral regions of the insertion portion 126b and by extending the channels thereby produced upwards (as seen in Fig. 6(B))through the terminal fixing recesses 126c. A pair of diametrically-opposite side faces of the recesses 126c are denoted 126e and 126f respectively. The insertion portion 126b of the fixing unit 126 is inserted into and fixed to the axial passageway 22b (Fig. 2(B)) of the rotary shaft 22, and the coil lead wires 125A-1 and 125B-1 are passed through the insertion holes 126d.

As shown in Figs. 2(B) and 5, wound in a spiral around the periphery of the terminal fixing unit 126 is the above-mentioned intermediate lead component 127 which is formed in a ribbon-like (band-like) shape from a elastic conductive material such as beryllium copper. Although the component 127 shown in Fig. 5 has a small number of windings, for clarity of the drawing, in practice the number of windings is greater. A lead wire fixing case 128 is arranged to surround the periphery of the spirally-formed lead component 127. The lead wire fixing case 128 is inserted into and fixed to the inner surface of a cylindrical recess provided at the lower end of the bearing-holding wall 21c of the motor case 21.

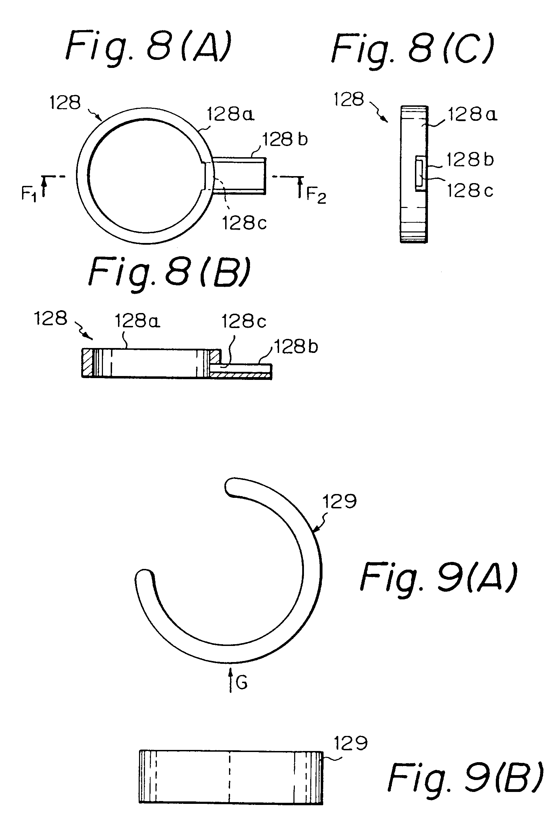

The lead component 127 is formed as shown in Figs. 7(A) and 7(B), and includes ribbon-like conductors 127-1 and 127-2 made of, for example, beryllium copper. As shown in the figures, the ribbon-like conductors 127-1 and 127-2 are arranged in parallel on an insulating film such as a polyimide film, and fixed thereto. A further insulating film 127-3 such as a polyimide film is formed thereover to complete the formation of the lead component 127. Ends of the ribbon-like conductors 127-1 and 127-2 at the inner end of the spiral are formed to have different lengths and have bent end portions. The bent portions form respective connection terminals (inner terminals) 127a and 127b to which the coil lead wires 125A-1 and 125B-1 are connected respectively (Figs. 2(A) and 5). The connection terminals 127a and 127b are fixed to the side faces 126e and 126f of the respective terminal fixing recesses 126c of the terminal fixing unit 126 shown in Fig. 6. Around the periphery of the terminal fixing unit 126 is fixed a collar 129 (Fig. 5) for securing to that unit the inner end of the lead component 127, which is wrapped around a part of the periphery of the terminal fixing unit 126. The collar 129 is substantially semi-annular in shape with a rectangular cross section, as shown in Figs. 9(A) and 9(B), and is made of an insulating material such as resin.

In Fig. 7, the outer ends of the conductors of the lead component 127 are bent parallel with one another, and the tips of the bent portions are fixed to the fixing case 128 and act as external power supply connection terminals (outer terminals) 127c and 127d to be connected to external power supply leads 130 (Fig. 2).

The lead wire fixing case 128 is moulded from an insulating material such as resin, as shown in Fig. 8. The case 128 comprises a hollow cylindrical portion 128a and a guide portion 128b extending radially outward from a location on the cylindrical portion 128a. A radial passageway 128c is provided through the cylindrical portion 128a at the said location. The connection terminals 127c and 127d on the outer end of the lead component 127 (Figs. 7) are inserted into the inner end of the radial passageway 128c and pass along the guide portion 128b, to which the terminals are fixed. The external power supply leads 130 (Figs. 2(B) and 5) are connected to the connection terminals 127c and 127d. The inner connection terminals 127a and 127b of the lead component 127 (Figs. 7) are fixed to the terminal fixing unit 126 as mentioned above, and the outer connection terminals 127c and 127d are fixed to the lead wire fixing case 128. The spiral-form portion of the lead component 127 is arranged to be able to move freely and may also be formed so as to apply a desired offset force (restoring force) when appropriate.

In the above-described embodiment, when forward and reverse drive currents are applied to the coils 25A and 25B, the bobbin 24, the code wheel 31, the capstan 28, and the rotary shaft 22 are all displaced together angularly in forward and reverse directions respectively within a preset restricted angular range. On the periphery of the capstan 28 is wound a steel belt (not shown), and by means of the steel belt, angular displacement of the rotary shaft can bring about positioning of a driven member such as a magnetic head in a magnetic disk unit, for example. During such angular displacement, the coil lead wires 125A-1 and 125B-1 move together with the coils 25A and 25B and the rotary shaft 22 so that the coil lead wires are not subjected to stress by the repeated oscillatory motion of the rotary shaft 22. In this embodiment, the spiral lead component 127 is subjected to repeated stress, but has a spring-like characteristic (resilience) as mentioned above, and the repeated stress acts within the elastic limit of the lead component 127. Moreover, the stress is distributed along the lead component 127 so that even when the above-mentioned angular range is relatively large the fatigue strength thereof is sufficient to resist the repeated stress to which it is subjected, enabling an operating lifetime of, for example, one billion swing motions to be obtained, thus significantly increasing the reliability of the encoder motor. Further, by virtue of the arrangement by which the coil lead wires 125A-1 and 125B-1 pass through the inside of the rotary shaft 22, the coil lead wires 125A-1 and 125B-1 do not appreciably affect the rotational operation of the rotary shaft 22 so that the offset force around the rotary shaft 22 can be stabilized.

Thus, the size of the motor can be reduced and offset force around the rotary shaft (22) can be stabilized to improve controllability. By applying an offset force (restoring force) using a pre-stressed lead component (127), it is possible to automatically bring a driven member used in a positioning operation back to an initial position when the power supply to the motor is cut off.

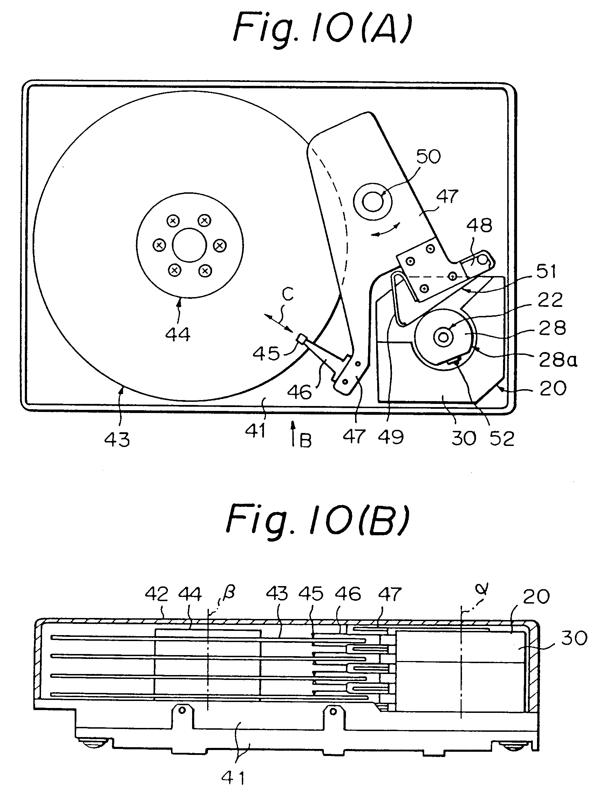

Figures 10(A) and 10(B) are views showing a compact magnetic disk drive in which the embodiment of Fig. 2 can be used. Figure 10(A) is a plan view with a cover removed, and Fig. 10(B) a cross-sectional side view with the cover sectioned in the direction of an arrow "B" shown in Fig. 10(A). In the Figures, numeral 41 represents a base and 42 a cover, which together constitute a casing of the unit. Numeral 43 represents a plurality of magnetic disks each having a diameter of, for example, 3.5 inches (approx. 8.89cm). The disks 43 are spaced apart vertically, arranged coaxially in a multi-storey structure, and fitted to a supporting rotary shaft 44. The disks 43 are rotatable together with the supporting shaft 44 around an axis of rotation . The supporting shaft 44 is supported on the base 41. A numeral 45 represents magnetic heads; 46 head arms; 47 a head arm holding member (swing arm); 48 a flex arm fitted to the holding member 47; and 49 a tension spring fitted on the opposite side of the flex arm 48. The holding member (swing arm) 47 is supported rotatably by a supporting shaft 50 disposed on the base 41. Numeral 51 represents a steel belt. The steel belt 51 is wound around the periphery 28a of a capstan 28. The steel belt 51 is fixed to the capstan 28 by a fitting screw 52 at a central portion thereof. One end of the steel belt 51 is fitted to the flex arm 48, and the other end thereof is fitted to the tension spring 49. The resilience of the arm 48 and the spring 49 apply a predetermined tension to the steel belt 51. When the capstan 28 is rotated in opposite directions the holding member 47 is rotated in opposite directions correspondingly by the steel belt 51 so that the magnetic heads 45 are moved in opposite directions as indicated by the arrow "C" (in opposite radial directions over the disks 43) to a predetermined desired position. An encoder motor 20 embodying the present invention is particularly applicable to a compact magnetic disk unit because it can enable overall size of the disk unit to be reduced.

In the disk unit of Figs. 10A and 10B the peripheral space corresponding to the periphery 28a of the capstan 28 and other than the moving area of the swinging portion can be reserved for encoder components. Within this space may be mounted encoder elements such as a light source (not shown) facing one side of a code wheel 31, a phase plate (not shown) facing the other side of the code wheel 31, a photosensor portion (a photodiode matrix) (not shown), a printed circuit board including an encoder demodulating portion (not shown), and a demodulating circuit (not shown) so as to make up an encoder portion 30. As a result, the above-mentioned space is effectively used.

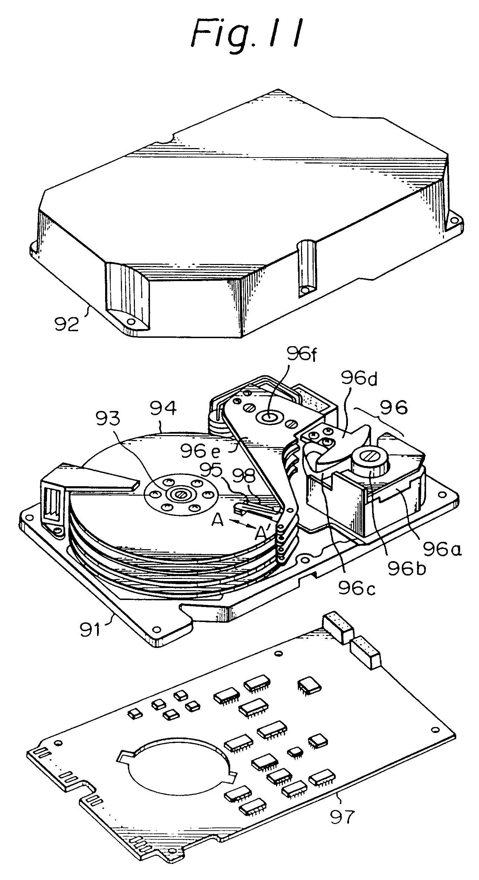

Figure 11 is an exploded perspective view showing another magnetic disk unit to which an encoder motor embodying the present invention can be applied. As shown in this Figure, the disk unit has a case comprising a base 91 and a cover 92. The case accommodates a plurality of magnetic disks 94 fixed to a spindle 93, a plurality of magnetic heads 95 for performing magnetic recording and reading with respect to both sides of respective magnetic disks 94, and a head actuator 96 for positioning the magnetic heads 95 in the directions of the arrows "A" and "A′" on the surfaces of the magnetic disks. The head actuator 96 comprises a driving motor 96a, a capstan 96b, a steel belt 96c, a sector 96d, head arms 96e, a pivot 96f, etc. On the surface of the base 91 are arranged a spindle driving motor, and a main printed circuit board 97 including a printed circuit board (not shown) with a driving circuit for the spindle driving motor and a writing and reading circuit for the magnetic disks.

## Claims

1. A rotary drive device comprising:
a magnetic stator [26A, 26B];
a rotor structure attached to a drive shaft [22] of the device and including at least one electrical drive coil winding [25A, 25B];
positional detection means [31 to 35], including an encoded member movable rotatably with the said drive shaft, for providing monitoring signals dependent upon the rotational position of the drive shaft with respect to the said stator when rotation of that shaft is brought about by energization of the said drive coil winding(s); and
control means operable in dependence upon the said monitoring signals to control rotation of the said drive shaft within a preset restricted angular range;
characterised in that coil lead wires [125A-1, 125B-1], for supplying electrical current to the said drive coil winding(s) [25A, 25B], extend from the drive coil winding(s) through a substantially radial passageway [22c] in the said drive shaft, at a location substantially mid-way therealong, to an axial passageway [22b] therein and continue along that axial passageway to emerge from one end [22d] of the drive shaft;
and in that respective ends of the drive coil lead wires [125A-1, 125B-1] that protrude from the said one end [22d] of the drive shaft [22] are connected to respective terminals [127a, 127b] provided on a terminal fixing unit [126] mounted on the said drive shaft at the said one end so as to rotate therewith.

2. A device as claimed in claim 1, further comprising ribbon-like resilient electrically-conductive intermediate lead means [127-1, 127-2] extending in a spiral about a part of the said terminal fixing unit and providing connections between the said terminals [127a,127b] and respective external power supply terminals [127c,127d] of the device.

3. A device as claimed in claim 1 or 2, wherein the said rotor structure is of a hollow cylindrical shape and is made up of a substantially cylindrical rotor body [24], attached coaxially to the said drive shaft [22], the said electrical drive coil winding(s) [25A, 25B] being carried by the rotor body.

4. A device as claimed in claim 3, wherein the or each drive coil winding [25A, 25B] is disposed on a cylindrical outer surface portion of the rotor body and is in the form of a substantially rectangular loop the plane of which has been wrapped substantially half-way around the cylindrical rotor body so that opposite sides of the rectangular loop provide torque-generating portions [25A-1, 25A-2, 25B-1, 25B-2] thereof at respective locations that are substantially diametrically opposed to one another across the rotor body.

5. A device as claimed in any preceding claim, wherein the coefficient of thermal expansion of the said encoded member is substantially equal to that of the said rotor body.

6. A device as claimed in any preceding claim, wherein the said encoded member is a code wheel [31] extending coaxially around the said drive shaft [22] of the device.

7. A device as claimed in any preceding claim, further comprising rolling bearings [23A, 23B], for supporting the drive shaft, having respective outer rings held by an inner surface of a cylindrical bearing-holding wall [21c] formed integrally with outer casing wall portions [21a, 21b] of the device.

8. A device as claimed in any preceding claim, further comprising a swing arm connected to be driven by the said drive shaft within a restricted angular range of movement.

9. A device as claimed in claim 8, wherein the said positional detection means further include a printed circuit board [35], having signal processing circuitry occupying a space outside the restricted angular range of movement of the swing arm, the coefficient of thermal expansion of the said printed circuit board [35] being substantially equal to that of an outer casing wall portion [21a] of the device to which the board is attached.

10. A device as claimed in claim 9, wherein the said printed circuit board comprises an iron plate provided on both sides thereof with respective insulating films on which are formed circuit patterns.

11. A magnetic disk drive unit including a rotary drive device as claimed in claim 8, 9 or 10, wherein a disk head, for reading data from or writing data onto a surface of a magnetic disk, is mounted on the said swing arm so as to be displaced thereby across the said surface during rotation of the said drive shaft.

## Patentansprüche

1. Drehantriebsvorrichtung, umfassend:
einen magnetischen Stator [26A, 26B];
eine Rotorstruktur, die an einer Antriebswelle [22] der Vorrichtung befestigt ist und mindestens eine elektrische Antriebsspulenwicklung [25A, 25B] umfaßt;
eine Lagedetektionsvorrichtung [31 bis 35], die ein mit der Antriebswelle drehbar bewegliches kodiertes Glied umfaßt, um Überwachungssignale abhängig von der Drehlage der Antriebswelle bezüglich des Stators bereitzustellen, wenn die Drehung dieser Welle durch Erregung der Antriebsspulenwicklung(en) bewirkt wird; und
eine Steuerungsvorrichtung, die in Abhängigkeit von den Überwachungssignalen betreibbar ist, um die Drehung der Antriebswelle innerhalb eines vorgegebenen beschränkten Winkelbereichs zu steuern;
dadurch gekennzeichnet, daß sich Spulenzuleitungsdrähte [125A-1, 125B-1] zum Zuführen eines elektrischen Stroms zu der (den) Antriebsspulenwicklung(en) [25A, 25B] von der (den) Antriebsspulenwicklung(en) durch einen im wesentlichen radialen Durchlaß [22c] in der Antriebswelle an einer Stelle, die im wesentlichen auf halbem Wege entlang derselben liegt, zu einem axialen Durchlaß [22b] in derselben erstrecken und sich entlang dem axialen Durchlaß fortsetzen, um an einem Ende [22d] der Antriebswelle auszutreten;
und dadurch, daß entsprechende Enden der Antriebsspulen-Zuleitungsdrähte [125A-1, 125B-1], die aus dem einen Ende [22d] der Antriebswelle [22] überstehen, mit entsprechenden Anschlüssen [127a, 127b] verbunden sind, die auf einer Anschlußbefestigungseinheit [126] vorgesehen sind, welche an der Antriebswelle an dem einen Ende so montiert ist, daß sie sich mit diesem dreht.

2. Vorrichtung nach Anspruch 1, weiter umfassend bandartige, federelastische, elektrisch leitende Zwischenzuleitungsmittel [127-1, 127-2], die sich in einer Spirale um einen Teil der Anschlußbefestigungseinheit herum erstrecken und Verbindungen zwischen den Anschlüssen [127a,127b] und jeweiligen externen Energieversorgungsanschlüssen [127c,127d] der Vorrichtung bereitstellen.

3. Vorrichtung nach Anspruch 1 oder 2, bei der die Rotorstruktur von einer hohlen zylindrischen Form ist und aus einem im wesentlichen zylindrischen Rotorkörper [24] gebildet ist, der koaxial an der Antriebswelle [22] befestigt ist, wobei die elektrische(n) Antriebsspulenwindung(en) [25A, 25B] vom Rotorkörper getragen wird (werden).

4. Vorrichtung nach Anspruch 3, bei der die oder jede Antriebsspulenwicklung [25A, 25B] auf einem zylindrischen äußeren Oberflächenabschnitt des Rotorkörpers angeordnet ist und in Form einer im wesentlichen rechtwinkligen Schleife vorliegt, deren Ebene im wesentlichen halb um den zylindrischen Rotorkörper herumgewickelt worden ist, so daß gegenüberliegende Seiten der rechteckigen Schleife drehmomenterzeugende Abschnitte [25A-1, 25A-2, 25B-1, 25B-2] derselben an entsprechenden Stellen bereitstellen, die einander über den Rotorkörper hinweg im wesentlichen diametral gegenüberliegen.

5. Vorrichtung nach einem beliebigen vorangehenden Anspruch, bei der der thermische Ausdehnungskoeffizient des kodierten Elements im wesentlichen gleich dem des Rotorkörpers ist.

6. Vorrichtung nach einem beliebigen vorangehenden Anspruch, bei der das kodierte Element eine Kodescheibe [31] ist, die sich koaxial um die Antriebswelle [22] der Vorrichtung herum erstreckt.

7. Vorrichtung nach einem beliebigen vorangehenden Anspruch, weiter umfassend Wälzlager [23A, 23B] zum Halten der Antriebswelle mit jeweiligen Außenringen, die durch eine innere Oberfläche einer zylindrischen lagertragenden Wand [21c] gehalten werden, welche als Einheit mit Gehäuseaußenwandteilen [21a, 21b] der Vorrichtung ausgebildet ist.

8. Vorrichtung nach einem beliebigen vorangehenden Anspruch, weiter umfassend einen Schwenkarm, der so angekoppelt ist, daß er durch die Antriebswelle innerhalb eines beschränkten Bewegungswinkelbereichs angetrieben wird.

9. Vorrichtung nach Anspruch 8, in der die Lagedetektionsvorrichtung weiter eine Printplatte [35] mit Signalverarbeitungsschaltungen umfaßt, die einen Raum außerhalb des beschränkten Bewegungswinkelbereichs des Schwenkarms einnimmt, wobei der thermische Ausdehnungskoeffizient der Printplatte [35] im wesentlichen gleich dem eines Gehäuseaußenwandteils [21a] der Vorrichtung ist, an welchem die Platte befestigt ist.

10. Vorrichtung nach Anspruch 9, bei der die Printplatte eine Eisenplatte umfaßt, die auf ihren beiden Seiten mit jeweiligen Isolierfilmen versehen ist, auf denen Schaltungsmuster ausgebildet sind.

11. Magnetplattenantriebseinheit, umfassend eine Drehantriebsvorrichtung nach den Ansprüchen 8, 9 oder 10, bei der ein Plattenkopf zum Lesen von Daten von einer oder zum Schreiben von Daten auf eine Oberfläche einer Magnetplatte auf dem Schwenkarm so montiert ist, daß er während der Drehung der Antriebswelle von diesem über die Oberfläche verschoben wird.

## Revendications

1. Dispositif d'entraînement en rotation comprenant :
un stator magnétique (26A, 26B) ;
une structure de rotor fixée à un arbre d'entraînement (22) du dispositif et incluant au moins un enroulement de bobine d'entraînement électrique (25A, 25B) ;
un moyen de détection de position (31 à 35), incluant un élément codé pouvant tourner avec ledit arbre d'entraînement pour produire des signaux de surveillance en fonction de la position en rotation de l'arbre d'entraînement par rapport audit stator lorsque la rotation de cet arbre est due à l'excitation desdits enroulements de bobine d'entraînement ; et
un moyen de commande pouvant fonctionner en dépendance avec lesdits signaux de surveillance pour commander la rotation dudit arbre d'entraînement dans une plage angulaire limitée pré-établie,
caractérisé en ce que des fils de connexion de bobine (125A-1, 125B-1), pour appliquer du courant électrique auxdits enroulements de bobine d'entraînement (25A, 25B), s'étendent depuis lesdits enroulements de bobine d'entraînement au travers d'un passage sensiblement radial (22c) ménagé dans ledit arbre d'entraînement, en un emplacement sensiblement à mi-chemin le long de celui-ci, jusqu'à un passage axial (22b) ménagé en son sein et se prolongent le long de ce passage axial afin d'émerger depuis une extrémité (22d) de l'arbre d'entraînement ;
et en ce que des extrémités respectives des fils de connexion de bobine d'entraînement (125A-1, 125B-1) qui se font saillie depuis ladite une extrémité (22d) de l'arbre d'entraînement (22) sont connectées à des bornes respectives (127a, 127b) prévues sur une unité de fixation de bornes (126) montée sur ledit arbre d'entraînement au niveau de ladite une extrémité de manière à tourner avec.

2. Dispositif selon la revendication 1, comprenant en outre un moyen de connexion intermédiaire électriquement conducteur élastique en forme de ruban (127-1, 127-2) s'étendant en spirale autour d'une partie de ladite unité de fixation de bornes et constituant des connexions entre lesdites bornes (127a, 127b) et des bornes d'alimentation externes respectives (127c, 127d) du dispositif.

3. Dispositif selon la revendication 1 ou 2, dans lequel ladite structure de rotor présente une conformation cylindrique creuse et est constituée par un corps de rotor sensiblement cylindrique (24) fixé coaxialement audit arbre d'entraînement (22), lesdits enroulements de bobine d'entraînement électrique (25A, 25B) étant supportés par le corps de rotor.

4. Dispositif selon la revendication 3, dans lequel l'enroulement de bobine d'entraînement ou chaque enroulement de bobine d'entraînement (25A, 25B) est disposé sur une partie de surface externe cylindrique du corps de rotor et se présente sous la forme d'une boucle sensiblement rectangulaire dont le plan a été enroulé sensiblement sur un demi-périmètre autour du corps de rotor cylindrique de telle sorte que des côtés opposés de la boucle rectangulaire constituent des parties de génération de couple (25A-1, 25A-2, 25B-1, 25B-2) de celui-ci au niveau d'emplacements respectifs qui sont sensiblement diamétralement opposés l'un par rapport à l'autre par rapport au corps de rotor.

5. Dispositif selon l'une quelconque des revendications précédentes, dans lequel le coefficient de dilatation thermique dudit élément codé est sensiblement égal à celui dudit corps de rotor.

6. Dispositif selon l'une quelconque des revendications précédentes, dans lequel ledit élément codé est une roue de codage (31) s'étendant coaxialement autour dudit arbre d'entraînement (22) du dispositif.

7. Dispositif selon l'une quelconque des revendications précédentes, comprenant en outre des paliers de roulement (23A, 23B), destinés à supporter l'arbre d'entraînement, comportant des bagues externes respectives maintenues par une surface interne d'une paroi de support de palier cylindrique (21c) formée d'un seul tenant avec des parties de paroi de carter externe (21a, 21b) du dispositif.

8. Dispositif selon l'une quelconque des revendications précédentes, comprenant en outre un bras oscillant connecté pour être entraîné par ledit arbre d'entraînement dans une plage de déplacement angulaire limitée.

9. Dispositif selon la revendication 8, dans lequel ledit moyen de détection de position inclut en outre une plaquette de circuit imprimé (35) comportant un circuit de traitement de signal occupant un espace externe à la plage de déplacement angulaire limitée du bras oscillant, le coefficient de dilatation thermique de ladite plaquette de circuit imprimé (35) étant sensiblement égal à celui d'une partie de paroi de carter externe (21a) du dispositif auquel la plaquette est fixée.

10. Dispositif selon la revendication 9, dans lequel ladite plaquette de circuit imprimé comprend une plaque en fer munie sur ses deux côtés de films d'isolation respectifs sur lesquels sont formés des motifs de circuit.

11. Unité d'entraînement de disque magnétique incluant un dispositif d'entraînement en rotation selon la revendication 8, 9 ou 10, dans lequel une tête de disque, pour lire des données ou pour écrire des données sur une surface d'un disque magnétique, est montée sur ledit bras oscillant de manière à être déplacée ainsi au travers de ladite surface pendant la rotation dudit arbre d'entraînement.
